Europäisches Patentamt

European Patent Office

Office européen des brevets

(19)

(11) Veröffentlichungsnummer : **0 457 203 B1**

# (12) EUROPÄISCHE PATENTSCHRIFT

(45) Veröffentlichungstag der Patentschrift :
**29.09.93 Patentblatt 93/39**

(51) Int. Cl.$^5$ : **F26B 23/02, F26B 21/04, F26B 3/00**

(21) Anmeldenummer : **91107579.4**

(22) Anmeldetag : **10.05.91**

(54) **Verfahren zum emissionsfreien Trocknen einer Substanz in einer Trocknungstrommel.**

Die Akte enthält technische Angaben, die nach dem Eingang der Anmeldung eingereicht wurden und die nicht in dieser Patentschrift enthalten sind.

(30) Priorität : **18.05.90 CH 1707/90**

(43) Veröffentlichungstag der Anmeldung :
**21.11.91 Patentblatt 91/47**

(45) Bekanntmachung des Hinweises auf die Patenterteilung :
**29.09.93 Patentblatt 93/39**

(84) Benannte Vertragsstaaten :
**AT BE CH DE DK ES FR GB GR IT LI LU NL SE**

(56) Entgegenhaltungen :
**EP-A- 0 038 420**
**WO-A-89/11072**
**WO-A-90/09967**

(56) Entgegenhaltungen :
**DE-A- 2 254 848**
**DE-A- 2 302 836**
**FR-A- 2 466 439**
**GB-A- 2 015 419**
**US-A- 3 936 951**
**US-A- 4 245 570**
**US-A- 4 926 764**

(73) Patentinhaber : **SC TECHNOLOGY AG**
**Allmendstrasse 14**
**CH-5612 Villmergen (CH)**

(72) Erfinder : **KUNZ, Werner**
**Neuhofstrasse 32**
**CH-5600 Lenzburg (CH)**
Erfinder : **VONPLON, Armin**
**Zugerstrasse 27**
**CH-8917 Oberlunkhofen (CH)**

(74) Vertreter : **Legland, Brynjulv**
**Seefeldstrasse 225**
**CH-8008 Zürich (CH)**

EP 0 457 203 B1

Jouve, 18, rue Saint-Denis, 75001 PARIS

**Beschreibung**

Die Erfindung betrifft ein Verfahren zum Trocknen einer Substanz, wie beispielsweise Klärschlamm, Fischmehl, Schlämme aus Stärke-, Seifen- und Papierfabriken, sowie Biomasse, wie Holzspähne, Gras, Zuckerrübenschnitzel mittels eines Trommeltrockners.

Solche Substanzen können eine starke Geruchs- und Staubbelastung der Umgebung verursachen, was dann besonders unangenehm ist, wenn sich die Anlage, beispielsweise eine Klärschlammanlage, in der Nähe von Wohnhäusern befindet. Deshalb ist das Verfahren für ein emissionsarmes Trocknen ausgelegt.

In der DE-A-2 302 836 (Koppers) ist eine Anlage zum Trocknen von Abwasserschlamm beschrieben. Die Beheizung des Trommeltrockners erfolgt mittels der Rauchgase aus der Verbrennung und nicht aus einem geschlossenen Kreislauf mit indirekter Wärmeübertragung. Für die Nachbehandlung der Rauchgase ist eine sogenannte Chemikalienwäsche vorgesehen.

Die GB-B-2 015 419 (Thames) beschreibt eine Anlage zur Bearbeitung von Abwasserschlamm, die nach dem Fleischwolf- oder Spaghettimaschinen-Prinzip arbeitet, bei dem mehrere Stränge des getrockneten oder teigigen Schlamms durch ein Sieb gepresst und am Ausgang abgeschnitten werden.

Die US-A-3 936 951 (Haueise) beschreibt ein Verfahren zur Erwärmung einer Luftströmung in einer Lackierungsanlage für die Autoindustrie. Für die Bearbeitung bzw. das Trocken von Schlämmen ist diese Ausführung nicht vorgesehen.

Aufgabe der Erfindung ist die Schaffung eines Verfahrens zum Trocknen einer Substanz, bei dem praktisch keine Geruchs- oder Staubbelstung an die Umwelt abgegeben wird.

Diese Aufgabe ist erfindungsgemäss durch die Merkmale im ersten Patentanspruch gelöst.

Dabei wird ein Teilstrom des Dampf-/Luft-Gemisches kontinuierlich ausgekoppelt und einem Kondensator zugeführt, wobei das dadurch entstandene Kondensat einer weiteren Wärmebenutzung, beispielsweise einem Wärmetauscher, zugeführt wird.

Die Rauchgase passieren die Brennkammer und anschliessend einen Gas-/Gas-Wärmeaustauscher, in dem sie ihren Wärmeinhalt grösstenteils an das Dampf-/Luft-Gemisch des Trocknungskreislaufes abgeben.

Durch eine Kombination aus Filtriereinrichtung, Kondenator und Nachverbrennung in der Brennkammer kann die ausgekoppelte Luft bzw. die Rauchgase der Brennkammer praktisch geruchs- und staubfrei ($<2mg/Nm^3$) und ohne sichtbare Brüdenfahne an die Atmosphäre abgegeben werden.

Vorzugsweise wird ein wesentlicher Teil der für die Trocknung aufgewendeten Wärme - aufgrund des für einen Trommeltrockner, infolge des geschlossenen Trocknungsluftkreislaufes, ungewöhnlich hohen Taupunktes (80-90°C) - nach der Kondensation für die Gebäudeheizung, Produktvorwärmung oder andere Wärmeträger benutzt, wodurch eine mehrstufige Wärmenutzung realisiert wird.

Ferner kann der Brüdendampf einem Wärmeverbraucher zur Vorkonzentration von Produkten oder zur Lufterwärmung in einem Gaswärmetauscher zugeführt werden.

Zweckmässigerweise wird die Luft sämtlicher Förderelemente und Silos zur Geruchs- und Staubfreihaltung der Anlage abgesaugt und der Verbrennungskammer zugeführt.

Als Trocknungsenergie wird vorzugsweise fossile Energie verwendet.

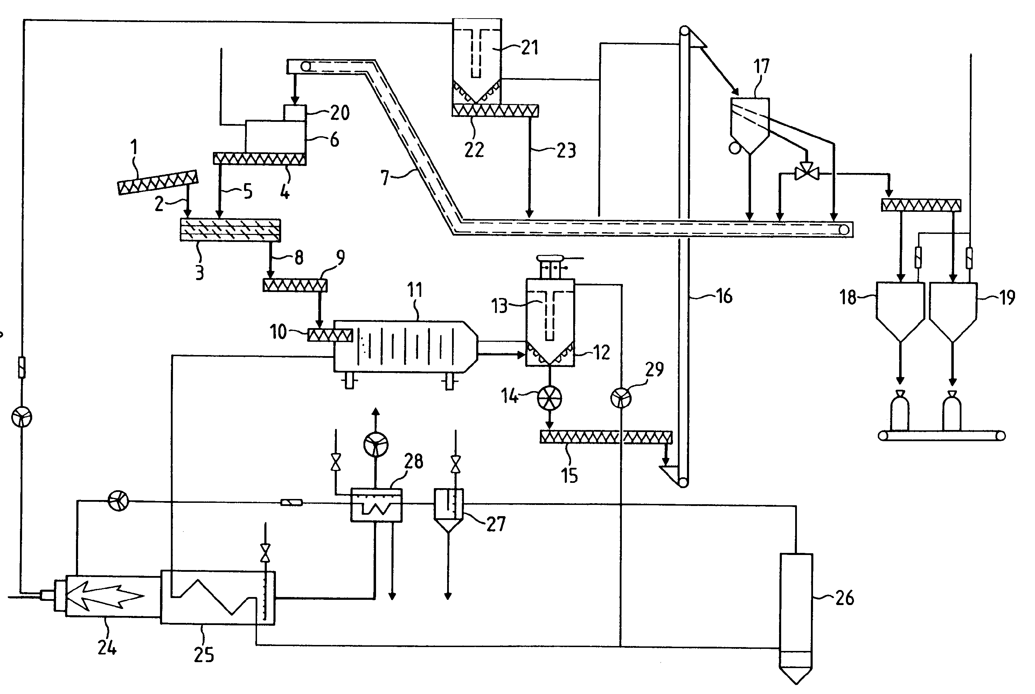

Nachfolgend wird ein Ausführungsbeispiel des Gegenstandes der Erfindung anhand der Zeichnung näher erläutert, in der ein Flussdiagramm einer Anlage zur Verarbeitung von Klärschlamm zu Granulat dargestellt ist.

Mittels einer Förderschnecke 1 wird entwässerter Schlamm 2 einem Doppelwellenmischer 3 zugeführt, dem ferner von einer zweiten Förderschnecke 7 Trockengut 5 von einem Silo 6 zugeführt wird, der über einen Kratzkettenförderer 7 gespiesen wird. Das Trockengut 4 besteht vorzugsweise aus einem getrockneten Endprodukt der gleichen Schlammart, wie das zu verarbeitende Produkt. Dabei wird das Granulat in einem Vibrationssieb 17 in drei Fraktionen aufgeteilt, wobei die unterste und die oberste Granulatgrösse dem Schlamm beigemischt wird. Die mittlere Fraktion wird dagegen in Säcken verpackt und kann als Düngemittel verwendet werden. Die nicht als Düngemittel absetzbare Menge kann auch verbrannt werden und hat einen Heizwert, der etwa demjenigen von Braunkohlen entspricht.

Vom Doppelwellenmischer 3 wird die rieselfähige Mischung 8 über Förderschnecken 9 und 10 einer Trocknungstrommel 11 zugeleitet, in welcher die trockenen Granulate dem Ausgang mittels Wirbelung zugeführt werden, während die nassen Teilchen langsamer vorwärtskommen und mehrmals zum Boden fallen, bis sie ausreichend trocken sind und zum Ausgang fliessen.

Der als Granulat anfallende, getrocknete Klärschlamm wird nach der Trommel 11 vom Luft-/Dampf-Gemisch durch einen Zyklonabscheider 12 mit integriertem Schlauchfilter 13 getrennt und das Granulat gelangt über eine Austragsschleuse 14, eine Schrägschnecke 15 und einen Elevator 16 zum Vibrationssieb 17, das die Sortierung in die drei Granulatgrössen vornimmt. Die Kühlung des Endproduktes erfolgt im Gegenstrom mit Umgebungsluft und verhindert die Kondensatbildung in den Lagersilos oder nach der Absackung.

2

Das Granulat hat eine Korngrösse von etwa 2 bis 4 mm, ist staubfrei und hygienisch einwandfrei und kann nach Kühlsilos 18 und 19 wahlweise verschiedenen Lager-, Verlade- oder Absackanlagen zugeführt werden.

Die Förderung der Granulatrückführung umfasst den Kratzkettenförderer 7, eine Brechermühle 20, den Trockengut-Rückführsilo 6 sowie die Dosierschnecke 4.

In der Brennkammer 24 werden mittels fossilen Brennstoffen die Gase aus Prozess- und Fördermitteln bzw. dem Granulatkühler auf über 750°C erwärmt. Der Wärmeinhalt dieser Gase wird in einem Wärmeaustauscher 25 an das Dampf-/Luft-Gemisch des geschlossenen Trocknerkreislaufes abgegeben. Das Dampf-/Luft-Gemisch wird im Wärmeaustauscher auf ca. 500°C erwärmt, trocknet im Trommeltrockner das Produkt, wird dabei abgekühlt und nimmt das verdampfte Wasser auf.

Nach dem Trommeltrockner wird das Produkt vom Dampf-/Luft-Gemisch in einem Zyklon 12 mit integriertem Staubfilter 13 getrennt. Mittels eines Ventilators 29 wird das Dampf-/Luft-Gemisch wieder dem Wärmetauscher 25 zur Erwärmung zugeführt, wobei ein Teil des Dampf-/Luft-Gemisches kontinuierlich abgesaugt und dem Kondensator 26, bzw. als Verbrennungsluft der Brennkammer 24 zugeführt wird.

Der Luftanteil aus dem Trocknungskreislauf kann nach der Kondensation auch über einen Tropfensbscheider 27 und einen Abluftwärmetauscher 28 der Brennkammer 24 als Verbrennungsluft zugeführt werden.

Die mittels der Kondensation ausgekoppelte Wärme bietet aufgrund des hohen Temperaturniveaus von 85 bis 90°C ideale Voraussetzungen für eine Wärmenutzung, wie Faulturmbehandlung, Schlammvorwärmung u. dgl..

Die Aspirationsluft der Fördervorrichtungen und die Kühlluft der Trockengutsilos werden im Schlauchfilter 21 gereinigt und zusammen mit der aus dem Trocknungskreislauf ausgekoppelten Luft der Brennkammer 24 als Verbrennungsluft zugeführt. Die im Schlauchfilter 21 vorhandenen Feinteile 23 werden über eine Austragsschnecke 22 ebenfalls dem Kratzkettenförderer 7 zur Rückführung ins Silo 6 zugeführt.

Die Anlage ist zur Geruchs- und Staubfreihaltung aspiriert, und Anlageteile sowie Förderelemente sind im Unterdruck betrieben, so dass ein Entweichen von geruchbelasteter Luft und Dampfkondensation in den Förderelementen verhindert wird.

Die Aspirationsluft der Transporteinrichtungen und die Kühlluft der Trockengutsilos werden in einem Schlauchfilter gereinigt und zusammen mit der aus dem Trocknungskreislauf ausgekoppelten Luft der Brennkammer 24 als Verbrennungsluft zugeführt.

Die Leistungs- und Betriebsdaten der im Beispiel beschriebenen Anlage sowie weitere Schaltungsdaten sind wie folgt:

Als Variante 1 sind die aktuellen Verbrauchs- und Betriebsdaten in einer Anlage aufgeführt, die ohne Schlammvorwärmung oder weitere Abwärmenutzung betrieben wird.

In Variante 2 sind die Daten einer baugleichen Ausführung bei Betrieb mit Schlammvorwärmung und einer dadurch 2% höheren Trockensubstanz aufgezeigt.

In Variante 3 sind die Betriebsdaten bei Betrieb mit Schlammvorwärmung und einer Abwärmenutzung für Faulturmbeheizung von 420 kW aufgeführt.

## 1. Durchsatzleistung und Wasserverdampfung

| Variante | 1 | 2 | 3 | |
|---|---|---|---|---|
| Trockensubstanz | 473.6 | 523.0 | 523.0 | kgTS/h |
| TS vor Trockner | 28 | 30 | 30 | % TS |
| TS nach Trockner | 95 | 95 | 95 | % TS |
| Menge KS vor Trockner | 1691.4 | 1743.5 | 1743.5 | kg/h |
| Menge KS nach Trockner | 498.5 | 550.6 | 550.6 | kg/h |
| Wasserverd. pro Linie | 1192.9 | 1192.9 | 1192.9 | kgWV/h |

## 2. Wärmebedarf

----------------

------------------------------------------------------------

| Variante | 1 | 2 | 3 | |
|---|---|---|---|---|

------------------------------------------------------------

| Temp.verl. Tr.ein | 450 | 450 | 450 | °C |
|---|---|---|---|---|
| Tr.aus | 125 | 126 | 126 | °C |
| Leistg.Wärmeerzeuger | 1.171 | 1.108 | 1.108 | MW |
| Brennstoff | Bio-Gas | Bio-Gas | Bio-Gas | |
| Heizwert Hw | 5400 | 5400 | 5400 | $kcal/Nm^3$ |
| Brennstoffverbrauch | 186 | 176 | 176 | $Nm^3/h$ |

Der Stromverbrauch für Antriebe dieser Anlage (exkl. Entwässerung) beträgt ca. 60 kw.

## Spez. Wärmebedarf

------------------

------------------------------------------------------------

| Variante | 1 | 2 | 3 | |
|---|---|---|---|---|

------------------------------------------------------------

| pro kg WV | 0.981 | 0.929 | 0.577 | kWh/kg |
|---|---|---|---|---|
| pro kg Schlamm 28(30)%TS | 0.692 | 0.636 | 0.395 | kWh/kg |
| pro kg Schlamm 95%TS | 2.348 | 2.013 | 1.250 | kW/kg |
| pro kg TS | 2.472 | 2.119 | 2.119 | kw/kg |

Sämtliche Anlageteile mit Ausnahme der Trockengranulatsilos sind aus rostfreiem Stahl.
Die thermischen Daten sind in vorstehender Tabelle aufgeführt.
Die Überwachung der Anlage kann von einem zentralen Leitstand aus erfolgen. Nebst den periodischen Schmierarbeiten sind keine speziellen Unterhaltsarbeiten erforderlich.

Tabelle 1
---------

Emissionen des Abwassers in der im Beispiel aufgeführten
Anlage.

------------------------------------------------------------

| | | | | | |
|---|---|---|---|---|---|
| pH | | 8.9 | 8.9 | 8.9 | 8.9 |
| TS | % | 0.04 | 0.04 | 0.04 | 0.04 |
| CSB | mg/l | 34.4 | 51.5 | 33.0 | 43.2 |
| DOC | mgC/l | 3.4 | 3.0 | 2.9 | 2.9 |
| $NH_4$ | mgN/l | 27.9 | 27.8 | 27.8 | 28.1 |
| Kiehld.-N | mgN/l | 27.9 | 27.3 | 27.8 | 28.1 |
| Ges.P | mgP/l | 7.6 | 6.7 | 7.2 | 6.9 |
| BSB5 | mg/l | 6 | 6 | 5 | 5 |

Tabelle 2

---------

Emission/Abgaswerte Rauchgase der im Beispiel aufgeführten Anlage.

Brennstoff: Faulgas

In der folgenden Tabelle sind die Mittelwerte der erfassten Messgrössen während des Messtages zusammengestellt.

Alle Werte sind auf einen $O_2$-Wert von 3% bezogen und für trockenes Gas im Normalzustand (273°K, 1013 mbar) angegeben.

| Stoff | | Konzentration | Grenzwert LRV/KIGA |
|---|---|---|---|
| Sauerstoff $O_2$ | % | 13.9+/-0.5 | -- |
| Kohlendioxyd $CO_2$ | % | 5.3+/-0.5 | -- |
| Feststoffe | mg/Nm$^3$ | 0.8+/-0.5 | 50 |
| Schwermetalle (staubf. und filtergängig) | | | |
| -Blei Pb | mg/Nm$^3$ | 0.13 + /-0.05 | 5 |
| -Zink Zn | mg/Nm$^3$ | <0.05 | -- |
| -Kadmium Cd | mg/Nm$^3$ | 0.004+/-0.002 | 0.2 |
| Qecksilber Hg | mg/Nm$^3$ | <0.004 | 0.2 |
| Chlorwasserstoff HCl | mg/Nm$^3$ | 17+/-2 | 30 |
| Fluorwasserstoff HF | mg/Nm$^3$ | <0.4 | 5 |
| Schwefeldioxid $SO_2$ | mg/Nm$^3$ | 39+/-4 | 500 |
| Ges.Kohlenst. als Cl | mg/Nm$^3$ | 39+/-4 | 50 |

Die beschriebene Trommeltrocknungsanlage besitzt gegenüber bestehenden Ausführungen u.a. die folgenden Vorteile:
- sehr tiefes Emissionsniveau, insbesondere auch keine Geruchsemission und keine Brüdenfahne. Alle Grenzwerte werden eingehalten und meist beträchtlich unterschritten (s. auch Messwerte gem. Tabelle 2),
- hohe Verfügbarkeit aufgrund des bewährten Trommeltrocknungskonzeptes,
- staubfreies, homogenes und bakteriologisch einwandfreies Granulat als Endprodukt, das problemlos lagerbar ist,
- problemlose Anpassbarkeit der Anlage an verschiedenen Schlammqualitäten und Feuchtigkeitsgehalte (Tabelle 1),
- hohes Wärmerückgewinnungspotential aus dem Kondensat,

- Möglichkeit zur Nutzung von Faulgas, und
- anspruchslos in bezug auf Betrieb und Unterhalt.

Die Eigenschaften einer Trommeltrockmungsanlage mit Umluftverfahren sind:

- 100% Rezirkulations-Luftrate bei Auskoppelung der Leckluft,
- Einbezug eines Luft - Luft - Wärmetauschers,
- Einbezug eines kombinierten Zyklon/Schlauchfilter-Abscheiders in den Trocknungskreislauf,
- Leckluft und geruchsbeladene Aspirationsluft der Förderelemente werden als Verbrennungsluft zur Heissgaserzeugung verwendet, und
- alle bewegten Dichtungen sowie Öffnungen befinden sich im Unterdruck.

Bezugsziffer

| 1 | Förderschnecke |
| 2 | Doppelwellenmischer |
| 3 | Förderschnecke |
| 4 | Trockengut |
| 5 | Trockengut-Rückführsilo |
| 6 | Kratzkettenförderer |
| 7 | rieselfähige Mischung |
| 8 | Förderschnecke |
| 9 | Förderschnecke |
| 10 | Trommeltrockner |
| 11 | Zyklonabscheider |
| 12 | Schlauchfilter |
| 13 | Austragungsschleuse |
| 14 | Schrägschnecke |
| 15 | Elevator |
| 16 | Vibrationssieb |
| 17 | Kühlsilo |
| 18 | Kühlsilo |
| 19 | Dosierschnecke |
| 20 | Zyklonabscheider |
| 21 | Schlauchfilter |
| 22 | Austragungsschleuse |
| 23 | Schrägschnecke |
| 24 | Brennkammer |
| 25 | Lufterhitzer |
| 26 | Kondensator |
| 27 | Tropfenabscheider |
| 28 | Abluftwärmetauscher |
| 29 | Ventilator |

**Patentansprüche**

1. Verfahren zum Trocknen einer Substanz mittels eines Trommeltrockners in einem geschlossenen Dampf-Luft-Kreislauf, dessen Druck im Bereich der Produktaufgabe sowie der Dichtungen an rotierenden Teilen unter dem Druck der Umgebungsluft liegt, wobei das Dampf-Luft-Gemisch nach dem Trockner in einem Zyklon mit integriertem Staubfilter vom Produkt getrennt und einem Wärmetauscher zugeführt wird, wobei das bei der Trocknung verdampfte Wasser sowie Filterspül- und Leckluft aus dem Kreislauf ausgekoppelt werden, indem der Wasserdampf einem Kondensator, und die nicht kondensierbaren Gase einer Brennkammer als Verbrennungsluft zur Wärmeerzeugung im Kreislauf zugeführt werden und wobei die Temperatur in der Brennkammer über 750°C gehalten wird.

2. Verfahren nach Anspruch 1, dadurch gekennzeichnet, dass das im Kondensator entstandene Kondensat einer weiteren Wärmebenutzung zugeführt wird.

3. Verfahren nach Anspruch 1, dadurch gekennzeichnet, dass der ausgekoppelte Brüdendampf einem Wärmeverbraucher zur Vorkonzentration von Produkten oder zur Lufterwärmung in einem Gas-Wärmetauscher zugeführt wird.

4. Verfahren nach Anspruch 1, dadurch gekennzeichnet, dass im Dampf-Luft-Kreislauf mit einem Taupunkt von 80 bis 90°C gearbeitet wird.

## Claims

1. Process for drying a substance in a drying drum in a closed vapour/air circulation, in which the pressure in the region of the product charge and of the seals at rotating parts is below the pressure of the surrounding air, that the vapour/air mixture after drying in a cyclone with integrated dust filter is separated from the product and supplied to an heat exchanger, that water evaporating during the drying process as well as filter rinsing air and leaking air are separated from the circulation by transferring the water vapour to a condenser and the uncondensable gases as combustion air to a combustion chamber for heating in the circulation, and that the temperature in the combustion chamber is kept above 750°C.

2. Process according to claim 1, characterized in that the condensate pruduced in the condenser is being used for a further heating application.

3. Process according to claim 1, characterized in that the vapour separated from the circulation is supplied to an heat consumption device for preconcentration of products or for heating of air in a gas heat exchanger.

4. Process according to claim 1, characterized in that the vapour/air circulation is carried out at a dew point from 80 to 90°C.

## Revendications

1. Procédé de séchage d'une substance à l'aide d'un séchoir à tambour dans un circuit fermé vapeur/air, dont la pression au niveau de l'introduction du produit ainsi que des étanchéités sur les parties tournantes sont en-dessous de la pression de l'air atmosphérique, le mélange vapeur/air en sortie du séchoir étant séparé du produit en aval du séchoir dans un cyclone à filtre à poussières intégré pour être fourni à un échangeur de chaleur, l'eau vaporisée au moment du séchage ainsi que l'air de rinçage de filtre et de fuite étant évacués du circuit en ce que la vapeur d'eau est fournie à un condenseur et les gaz non condensables étant fournis à une chambre de combustion comme air comburant pour générer la chaleur destinée au circuit, la température de la chambre de combustion étant maintenue supérieure à 750°C.

2. Procédé selon la revendication 1, caractérisé en ce que le condensat du condenseur est tranmis à une autre utilisation de chaleur.

3. Procédé selon la revendication 1, caractérisé en ce que la vapeur de traitement, ainsi séparée, est fournie à un utilisateur de chaleur pour pré-concentrer des produits ou pour chauffer de l'air dans un échangeur de chaleur à gaz.

4. Procédé selon la revendication 1, caractérisé en ce que le circuit vapeur/air travaille avec un point de rosée compris entre 80°C et 90°C.